# EUROPEAN PATENT APPLICATION

(11) **EP 2 106 110 A1**
(43) Date of publication of application: **30.09.2009**
(21) Application number: 09156407.0
(22) Date of filing: 27.03.2009
(51) Int. Cl.: H04M 3/42

(54) **Method, system and apparatus for cutting ringtones in a color ringback service**

(30) Priority: 28.03.2008 CN 200810084281; 15.01.2009 WO PCT/CN2009/070156
(71) Applicant: Huawei Technologies Co., Ltd., Longgang District Shenzhen 518129 (CN)
(72) Inventor: HUANG, Hui, Longgang District, Shenzen Guangdong 518129 (CN); JIANG, Lvqiang, Longgang District, Shenzen Guangdong 518129 (CN)
(74) Representative: Körber, Martin Hans

(57) **Abstract**

A method, system and apparatus for implementing a color ring service. The method includes the following steps: playing, by a Color Ring Back Tone platform, a whole ring tone according to a selection of a subscriber; and obtaining, by the Color Ring Back Tone platform, a ring tone section of the whole ring tone according to a selection of the subscriber when playing the whole ring tone, and setting the ring tone section as a color ring of the subscriber. With the embodiments of the present invention, the subscriber can select his favorite ring tone section when the CRBT platform plays the whole ring tone selected by the subscriber himself, and the CRBT platform can set the ring tone section as a color ring of the subscriber, thereby realizing setting a certain section of the whole ring tone as a color ring of the subscriber.

## Description

This application claims the priority of Chinese Patent Application No. 200810084281.8, filed on March 28, 2008 with the Chinese Patent Office and titled "Method, System and Apparatus for Implementing Color Ring Service", and the priority of International Patent Application No. PCT/CN2009/070156 filed on January 15, 2009, and the contents of both are incorporated herein by reference in their entireties.

### Field of the Invention

The present invention relates to the field of communication technology, and in particularly to a method, system and apparatus for implementing a color ring service.

### Background of the Invention

A Color Ring Back Tone (CRBT) refers to that, during the process that a fixed or mobile calling subscriber calls a called subscriber, the calling subscriber hears a piece of music or other sounds instead of a traditional "toot" ring back tone when the called subscriber starts to ring and before he hooks off. The device for playing the piece of music or the other sounds is called a CRBT platform, and the sound segment is called a color ring. A subscriber can make a subscription in the CRBT platform for playing a particular color ring.

In a CRBT system, the subscriber can access the CRBT platform by an Interaction Voice Response (IVR) approach to trail-listen the whole ring tone of a color ring, and can further set the whole ring tone as a color ring. The subscriber can use a fixed client or a mobile client to dial a designated service number to access an IVR system, and press a key or speak according to an operation prompt, and the IVR system plays corresponding information according to the contents input by the subscriber. Alternatively, the subscriber can access the CRBT platform by a WEB approach to trail-listen the whole ring tone online, and set the whole ring tone as a color ring.

In various available CRBT systems, it is impossible for the subscriber to set a certain section of the whole ring tone as a color ring.

### Summary of the Invention

The embodiments of the present invention provide a method, system and apparatus for implementing a color ring service, so as to realize setting a certain section of the whole ring tone as a color ring.

In order to realize setting a certain section of the whole ring tone as a color ring, according to an aspect, an embodiment of the present invention provides a method for implementing a color ring service, including:
playing, by a Color Ring Back Tone platform, a whole ring tone according to a selection of a subscriber; and
obtaining, by the Color Ring Back Tone platform, a ring tone section of the whole ring tone according to a selection of the subscriber when playing the whole ring tone, and setting the ring tone section as a color ring of the subscriber.

According to another aspect, an embodiment of the present invention provides a system for implementing a color ring service, including:
a Color Ring Back Tone platform, adapted to receive a first request message sent by a client; obtain a ring tone identifier of a whole ring tone selected by a subscriber; play, according to the ring tone identifier, the whole ring tone; receive, when playing the whole ring tone, a request sent by the client; obtain a ring tone section of the whole ring tone; and set the ring tone section as a color ring of the subscriber.

According to yet another aspect, an embodiment of the present invention provides a client, including:
a whole ring tone selecting unit, adapted to send a first request message to a Color Ring Back Tone platform, wherein the first request message carries a ring tone identifier of a whole ring tone selected by a subscriber; and
a ring tone section intercepting unit, adapted to send, when the Color Ring Back Tone platform plays the whole ring tone, a request to the Color Ring Back Tone platform to request intercepting a ring tone section of the whole ring tone.

According to still another aspect, an embodiment of the present invention provides a Color Ring Back Tone platform, including:
a first playing unit, adapted to play, according to a selection of a subscriber, a whole ring tone;
a ring tone section obtaining unit, adapted to obtain, when playing the whole ring tone, a ring tone section according to a selection of the subscriber; and
a setting unit, adapted to set the ring tone section as a color ring of the subscriber.

According to the above technical solutions, the following technical effects are obtained: with the embodiments of the present invention, the subscriber can select his favorite ring tone section when the CRBT platform plays the whole ring tone selected by the subscriber himself, and the CRBT platform sets the ring tone section as a color ring of the subscriber, thereby realizing setting a certain section of the whole ring tone as a color ring of the subscriber.

### Brief Description of the Drawings

Fig.1 is a flow chart of a method for setting a ring tone section as a color ring through accessing a CRBT platform by an IVR approach according to an embodiment of the present invention;

Fig.2 is a flow chart of a method for setting a ring tone section as a color ring through accessing a CRBT platform by a WEB approach according to an embodiment of the present invention;

Fig.3 is a flow chart of a method for playing a ring tone section by a CRBT platform according to an embodiment of the present invention;

Fig.4 is a diagram illustrating a structure of a system for implementing a color ring service according to an embodiment of the present invention;

Fig.5 is a diagram illustrating a structure of a client according to an embodiment of the present invention; and

Fig.6 is a diagram illustrating a structure of a CRBT platform according to an embodiment of the present invention.

### Detailed Description of the Embodiments

An embodiment of the present invention provides a method for implementing a color ring service. In the embodiment of the method, a subscriber can access the CRBT platform through a client by an IVR approach or a WEB online approach, select a whole ring tone, and select a ring tone section when the CRBT platform plays the whole ring tone, and the CRBT platform sets the ring tone section as a color ring of the subscriber, thereby realizing setting a certain section of the whole ring tone as a color ring.

Specifically, related information of the above ring tone section is stored in a database of the CRBT platform, and the related information includes: a whole ring tone time length, a start mark, an end mark, and a corresponding relationship between a ring tone serial number of the ring tone section and a subscriber number. When connecting a color ring call, the CRBT platform plays a corresponding sound file according to a queried corresponding relationship, as illustrated in Table 1:

**Table 1**

| | | | |
|---|---|---|---|
| subscriber number, ring tone serial number, etc. | whole ring tone time length | start mark | end mark |

Specifically,
(1) the whole ring tone time length refers to time required for the system to play the whole ring tone, in second.
(2) the start mark refers to time from the start of the whole ring tone to the start of the ring tone section, in second.
(3) the end mark refers to time from the start of the whole ring tone to the end of the ring tone section, in second.

Moreover, a playing start time point for starting to play the whole ring tone can also be recorded.

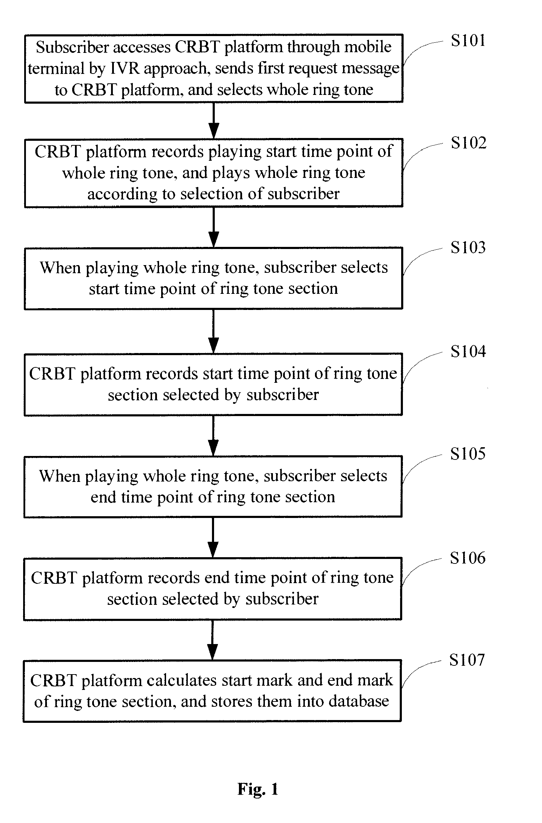

Fig.1 shows a flow chart of a method for setting a ring tone section as a color ring through accessing a CRBT platform by an IVR approach according to an embodiment of the present invention, the steps are as follows:

Block S101: A subscriber accesses the CRBT platform through a mobile terminal by an IVR approach, and sends a first request message to the CRBT platform to request trail-listening a whole ring tone. Specifically, a ring tone identifier of the whole ring tone selected by the subscriber is carried in the first request message.

Block S102: The CRBT platform records a playing start time point of the whole ring tone or a whole ring tone time length before starting to play the whole ring tone selected by the subscriber, and plays the whole ring tone according to a selection of the subscriber.

Block S103: When trail-listening the whole ring tone, the subscriber can press a start marking key (e.g. key "*") of the mobile terminal to send a second request message to the CRBT platform to select a start time point of the ring tone section. Specifically, the start time point of the ring tone section selected by the subscriber, i.e. the time point when the subscriber presses the start marking key of the mobile terminal, is carried in the second request message.

Block S104: The CRBT platform records the start time point of the ring tone section selected by the subscriber.

Block S105: During the subsequent trail-listening of the whole ring tone, the subscriber can press an end marking key (e.g. key "*") of the mobile terminal to send a third request message to the CRBT platform to select an end time point of the ring tone section. Specifically, the end time point of the ring tone section selected by the subscriber, i.e. the time point when the subscriber presses the end marking key of the mobile terminal, is carried in the third request message.

Block S106: The CRBT platform records the end time point of the ring tone section selected by the subscriber.

Block S107: The CRBT platform calculates, according to a playing start time point of the whole ring tone, and the start time point and the end time point of the ring tone section, a start mark and an end mark of the ring tone section, and stores the start mark and the end mark of the ring tone section into a database of the CRBT platform.

In the Block S107, alternatively, the CRBT platform calculates, according to a whole ring tone time length, and the start time point and the end time point of the ring tone section, a start mark and an end mark of the ring tone section, and stores the start mark and the end mark of the ring tone section into a database of the CRBT platform.

Then, the ring tone section selected by the subscriber can be obtained according to the start mark and the end mark, and the ring tone section selected by the subscriber can be set as a color ring.

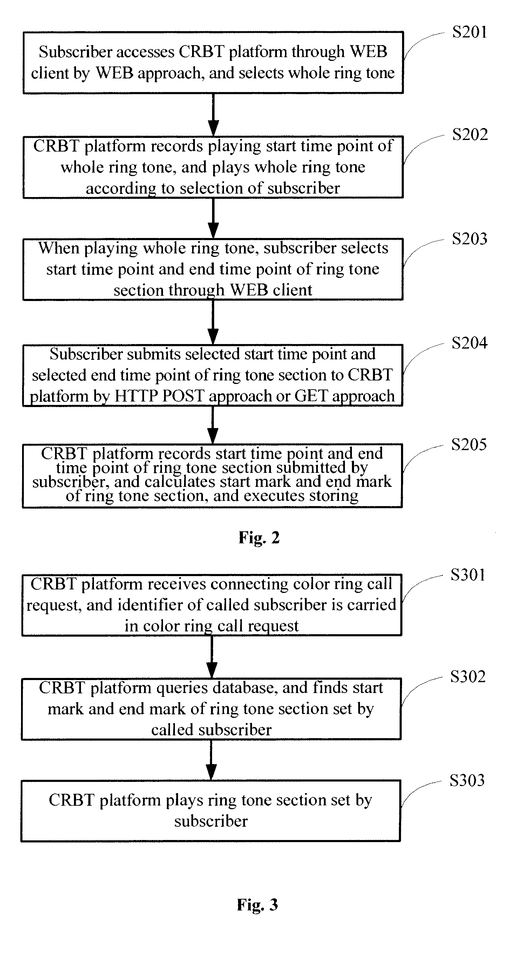

Fig.2 shows a flow chart of a method for setting a ring tone section as a color ring through accessing a CRBT platform by a WEB approach according to an embodiment of the present invention, the steps are as follows:

Block S201: A subscriber accesses the CRBT platform through a WEB client by a WEB approach, and selects his favorite whole ring tone in a WEB page.

In other words, the subscriber can send a first request message to the CRBT platform to request trail-listening the whole ring tone. Specifically, a ring tone identifier of the whole ring tone selected by the subscriber is carried in the first request message.

Block S202: The CRBT platform records a playing start time point of the whole ring tone or a whole ring tone time length before starting to play the whole ring tone selected by the subscriber, and plays the whole ring tone according to a selection of the subscriber.

Block S203: When trail-listening the whole ring tone, the subscriber selects, in the CRBT platform, a start time point and an end time point of the ring tone section of the whole ring tone through the WEB client.

Block S204: The subscriber submits the selected start time point and the selected end time point of the ring tone section to the CRBT platform by a Hypertext Transfer Protocol (HTTP) POST approach or a GET approach.

In other words, the subscriber can send to the CRBT platform a second request message and a third request message by a WEB approach to select the start time point and the end time point of the ring tone section.

Block S205: The CRBT platform records the start time point and the end time point of the ring tone section submitted by the subscriber, and calculates, according to the playing start time point of the whole ring tone, and the start time point and the end time point of the ring tone section, a start mark and an end mark of the ring tone section, and stores the start mark and the end mark of the ring tone section into a database of the CRBT platform.

In the Block S205, alternatively, the CRBT platform records the start time point and the end time point of the ring tone section submitted by the subscriber, and calculates, according to a whole ring tone time length, and the start time point and the end time point of the ring tone section, a start mark and an end mark of the ring tone section, and stores the start mark and the end mark of the ring tone section into a database of the CRBT platform.

Then, the ring tone section selected by the subscriber can be obtained according to the start mark and the end mark, and the ring tone section selected by the subscriber can be set as a color ring.

Fig.3 shows a flow chart of a method for playing a ring tone section by a CRBT platform according to an embodiment of the present invention, the steps are as follows:

Block S301: The CRBT platform receives a connecting color ring call request, and the identifier of a called subscriber (e.g. the number of the called subscriber) is carried in the color ring call request.

Block S302: The CRBT platform queries, according to the color ring call request, a database, and finds data of the start mark and the end mark of the ring tone section set by the called subscriber.

Block S303: The CRBT platform plays the ring tone section set by the subscriber. When the CRBT platform plays the ring tone section set by the subscriber, the CRBT call process can calculate an offset sound playing point according to the start mark of the ring tone section, and end the sound playing upon reaching the end mark of the ring tone section.

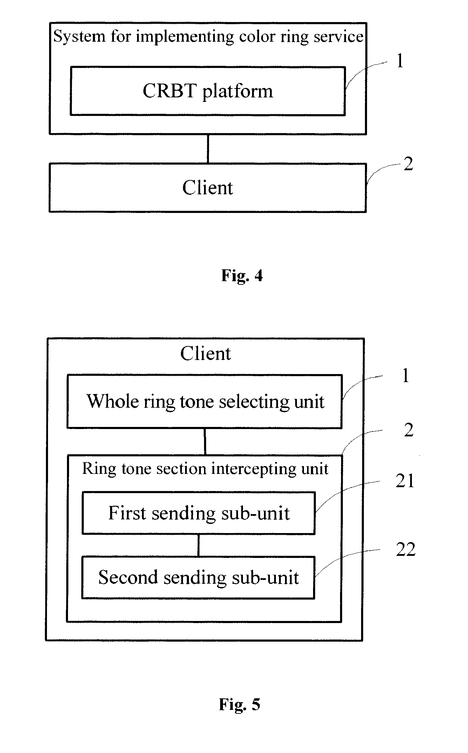

Fig.4 shows a diagram illustrating a structure of a system for implementing a color ring service according to an embodiment of the present invention, including: a CRBT platform 1, adapted to receive a first request message sent by a client 2; obtain a ring tone identifier of a whole ring tone selected by a subscriber; play, according to the ring tone identifier, the whole ring tone; receive, when playing the whole ring tone, a request sent by the client 2; obtain a ring tone section of the whole ring tone; and set the ring tone section as a color ring of the subscriber.

Fig.5 shows a diagram illustrating a structure of a client according to an embodiment of the present invention, including: a whole ring tone selecting unit 1, adapted to send a first request message to a CRBT platform, wherein the first request message carries a ring tone identifier of the whole ring tone selected by a subscriber; and a ring tone section intercepting unit 2, adapted to send, when the CRBT platform plays the whole ring tone, a request to the CRBT platform to request intercepting a ring tone section of the whole ring tone.

The above ring tone section intercepting unit 2 includes: a first sending sub-unit 21, adapted to send, when the CRBT platform plays the whole ring tone, a second request message to the CRBT platform, wherein the second request message carries a start time point of the ring tone section selected by the subscriber from the whole ring tone; and a second sending sub-unit 22, adapted to send, when the CRBT platform plays the whole ring tone, a third request message to the CRBT platform, wherein the third request message carries an end time point of the ring tone section selected by the subscriber from the whole ring tone.

The above client includes a mobile terminal or a WEB client.

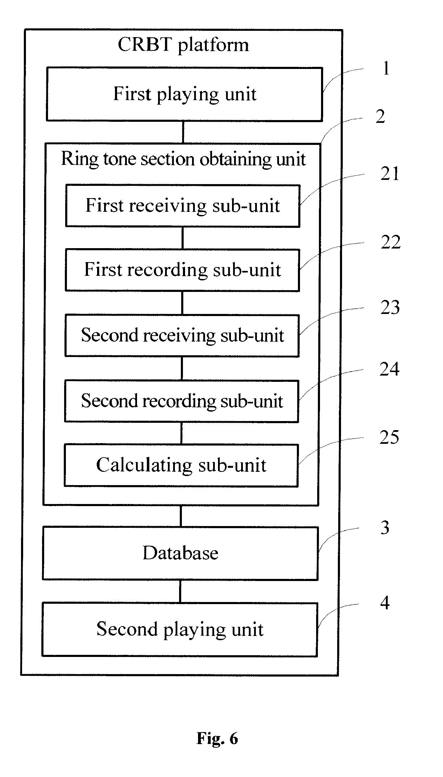

Fig.6 shows a diagram illustrating a structure of a CRBT platform according to an embodiment of the present invention, including: a first playing unit 1, adapted to play, according to a selection of a subscriber, a whole ring tone; a ring tone section obtaining unit 2, adapted to obtain, when playing the whole ring tone, a ring tone section according to a selection of the subscriber; a setting unit 3, adapted to set the ring tone section as a color ring of the subscriber; a database 4, adapted to store related information of the ring tone section, wherein the related information includes a start mark and an end mark of the ring tone section; and a second playing unit 5, adapted to play, according to the start mark and the end mark, the ring tone section when connecting a color ring call.

The above ring tone section obtaining unit 2 includes: a first receiving sub-unit 21, adapted to receive, when the first playing unit 1 plays the whole ring tone, a second request message sent by a client, wherein the second request message carries a start time point of the ring tone section selected by the subscriber from the whole ring tone; a first recording sub-unit 22, adapted to record the start time point of the ring tone section; a second receiving sub-unit 23, adapted to receive, when the first playing unit 1 plays the whole ring tone, a third request message sent by the client, wherein the third request message carries an end time point of the ring tone section selected by the subscriber from the whole ring tone; a second recording sub-unit 24, adapted to record the end time point of the ring tone section; and a calculating sub-unit 25, adapted to calculate, according to a playing start time point of the whole ring tone, and the start time point and the end time point of the ring tone section, a start mark and an end mark of the ring tone section.

Alternatively, the above calculating sub-unit 25 is adapted to calculate, according to a whole ring tone time length of the whole ring tone, and the start time point and the end time point of the ring tone section, a start mark and an end mark of the ring tone section.

With the above embodiments of the present invention, a subscriber can access the CRBT platform in an IVR approach or a WEB approach, select his favorite whole ring tone, and intercept any certain favorite ring tone section for himself from the whole ring tone, and the CRBT platform can set the ring tone section intercepted by the subscriber himself as his color ring, thereby meeting the need for the subscriber to set a certain ring tone section of his interest as a color ring. Further, with the above embodiments of the present invention, the subscriber can also select certain favorite ring tone sections for his contacts, and put them into effect in the CRBT platform, so that they can hear the favorite ring tone sections of their own when calling the client of the subscriber.

A skilled person in the art shall understand that the appended drawings are illustrative for preferred embodiments. The units and the processes in the drawings are not compulsory for implementing this invention.

A skilled person in the art shall understand that the units in the apparatus of the embodiment can be located in the apparatus of the embodiment, and can also be located in one or more apparatuses different from the embodiment with corresponding variations. The units of the above embodiment can be combined into one unit, and further, can also be divided into a plurality of sub-units.

With the description of the above embodiments, a skilled person in the art shall realize that this invention can be implemented in hardware, and certainly can also be implemented in software in combination with a necessary common hardware platform. However, the former is a more preferred embodiment for a lot of situations. Based on this understanding, the technical solutions of the invention can essentially, or the part containing an improvement to the prior art can be embodied in a form of hardware products. Those ordinarily skilled in the art shall understand that all or part of the steps in the above embodiments of the method can be implemented by program instructing relevant hardware, and the program can be stored in a computer readable storage medium, such as an ROM/RAM, a magnetic disk, an optical disk and the like.

The method, system and apparatus for implementing a color ring service provided by the present invention has been described in detail in the above, and specific examples have been employed to describe the principle and the embodiments of the invention herein. The above description of the embodiments is used for a better understanding to the method and the core idea of the invention. At the same time, with the idea of the invention, those ordinarily skilled in the art can make modifications to both the exemplary embodiments and the application scope. To sum up, the contents of the specification shall not be considered as a limitation to the invention.

## Claims

1. A method for implementing a color ring service, **characterized by** comprising:
playing, by a Color Ring Back Tone platform, a whole ring tone according to a selection of a subscriber; and
obtaining, by the Color Ring Back Tone platform, a ring tone section of the whole ring tone according to a selection of the subscriber when playing the whole ring tone, and setting the ring tone section as a color ring of the subscriber.

2. The method for implementing a color ring service according to claim 1, wherein the process of playing, by the Color Ring Back Tone platform, a whole ring tone according to a selection of a subscriber comprises:
receiving a first request message sent by the subscriber through a client, wherein the first request message carries a ring tone identifier of the whole ring tone selected by the subscriber; and
playing, according to the ring tone identifier, the whole ring tone.

3. The method for implementing a color ring service according to claim 1 or 2, wherein the Color Ring Back Tone platform obtains the ring tone section of the whole ring tone according to a start time point and an end time point selected by the subscriber, and the method comprises:
receiving, when playing the whole ring tone, a second request message sent by the subscriber through a client, wherein the second request message carries the start time point of the ring tone section selected by the subscriber from the whole ring tone;
recording the start time point of the ring tone section;
receiving, when playing the whole ring tone, a third request message sent by the subscriber through the client, wherein the third request message carries the end time point of the ring tone section selected by the subscriber from the whole ring tone;
recording the end time point of the ring tone section; and
calculating, according to a playing start time point of the whole ring tone, and the start time point and the end time point of the ring tone section, a start mark and an end mark of the ring tone section, and obtaining the ring tone section of the whole ring tone.

4. The method for implementing a color ring service according to claim 1, 2 or 3, wherein the Color Ring Back Tone platform obtains the ring tone section of the whole ring tone according to a start time point and an end time point selected by the subscriber, and the method comprises:
receiving, when playing the whole ring tone, a second request message sent by the subscriber through a client, wherein the second request message carries the start time point of the ring tone section selected by the subscriber from the whole ring tone;
recording the start time point of the ring tone section;
receiving, when playing the whole ring tone, a third request message sent by the subscriber through the client, wherein the third request message carries the end time point of the ring tone section selected by the subscriber from the whole ring tone;
recording the end time point of the ring tone section; and
calculating, according to a whole ring tone time length of the whole ring tone, and the start time point and the end time point of the ring tone section, a start mark and an end mark of the ring tone section, and obtaining the ring tone section of the whole ring tone.

5. The method for implementing a color ring service according to claim 3 or 4, wherein after calculating the start mark and the end mark of the ring tone section, the method further comprises:
storing, by the Color Ring Back Tone platform, related information of the ring tone section into a database, wherein the related information comprises the start mark and the end mark of the ring tone section.

6. A system for implementing a color ring service, **characterized by** comprising:
a Color Ring Back Tone platform, adapted to receive a first request message sent by a client; obtain a ring tone identifier of a whole ring tone selected by a subscriber; play, according to the ring tone identifier, the whole ring tone; receive, when playing the whole ring tone, a request sent by the client; obtain a ring tone section of the whole ring tone; and set the ring tone section as a color ring of the subscriber.

7. A client, **characterized by** comprising:
a whole ring tone selecting unit, adapted to send a first request message to a Color Ring Back Tone platform, wherein the first request message carries a ring tone identifier of a whole ring tone selected by a subscriber; and
a ring tone section intercepting unit, adapted to send, when the Color Ring Back Tone platform plays the whole ring tone, a request to the Color Ring Back Tone platform to request intercepting a ring tone section of the whole ring tone.

8. The client according to claim 7, wherein the ring tone section intercepting unit comprises:
a first sending sub-unit, adapted to send, when the Color Ring Back Tone platform plays the whole ring tone, a second request message to the Color Ring Back Tone platform, wherein the second request message carries a start time point of the ring tone section selected by the subscriber from the whole ring tone; and
a second sending sub-unit, adapted to send, when the Color Ring Back Tone platform plays the whole ring tone, a third request message to the Color Ring Back Tone platform, wherein the third request message carries an end time point of the ring tone section selected by the subscriber from the whole ring tone.

9. The client according to claim 7 or 8, wherein the client comprises a mobile terminal or a WEB client.

10. A Color Ring Back Tone platform, **characterized by** comprising:
a first playing unit, adapted to play, according to a selection of a subscriber, a whole ring tone;
a ring tone section obtaining unit, adapted to obtain, when playing the whole ring tone, a ring tone section according to a selection of the subscriber; and
a setting unit, adapted to set the ring tone section as a color ring of the subscriber.

11. The Color Ring Back Tone platform according to claim 10, wherein the ring tone section obtaining unit comprises:
a first receiving sub-unit, adapted to receive, when the first playing unit plays the whole ring tone, a second request message sent by a client, wherein the second request message carries a start time point of the ring tone section selected by the subscriber from the whole ring tone;
a first recording sub-unit, adapted to record the start time point of the ring tone section;
a second receiving sub-unit, adapted to receive, when the first playing unit plays the whole ring tone, a third request message sent by the client, wherein the third request message carries an end time point of the ring tone section selected by the subscriber from the whole ring tone;
a second recording sub-unit, adapted to record the end time point of the ring tone section; and
a calculating sub-unit, adapted to calculate, according to a playing start time point of the whole ring tone, and the start time point and the end time point of the ring tone section, a start mark and an end mark of the ring tone section.

12. The Color Ring Back Tone platform according to claim 10 or 11, wherein the ring tone section obtaining unit comprises:
a first receiving sub-unit, adapted to receive, when the first playing unit plays the whole ring tone, a second request message sent by a client, wherein the second request message carries a start time point of the ring tone section selected by the subscriber from the whole ring tone;
a first recording sub-unit, adapted to record the start time point of the ring tone section;
a second receiving sub-unit, adapted to receive, when the first playing unit plays the whole ring tone, a third request message sent by the client, wherein the third request message carries an end time point of the ring tone section selected by the subscriber from the whole ring tone;
a second recording sub-unit, adapted to record the end time point of the ring tone section; and
a calculating sub-unit, adapted to calculate, according to a whole ring tone time length of the whole ring tone, and the start time point and the end time point of the ring tone section, a start mark and an end mark of the ring tone section.

13. The Color Ring Back Tone platform according to claim 10, 11 or 12, further comprising:
a database, adapted to store related information of the ring tone section, wherein the related information comprises a start mark and an end mark of the ring tone section.

14. The Color Ring Back Tone platform according to one of the claims 10 to 13, further comprising:
a second playing unit, adapted to play, according to a start mark and an end mark, the ring tone section when connecting a color ring call.

15. A computer program product, **characterized by** comprising computer program code, which, when executed by a computer unit, causes the computer unit to perform the steps of any one of claims 1-5.
